# EUROPEAN PATENT SPECIFICATION

(11) **EP 4 624 329 B1**
(45) Date of publication and mention of the grant of the patent: **29.07.2026**
(21) Application number: 25161302.2
(22) Date of filing: 03.03.2025
(51) Int. Cl.: B64D 1/18, B64U 10/14, B64U 10/60, B64U 10/13, B64U 101/28, B64U 101/29

(54) **PIECE OF EQUIPMENT FOR CLEANING, PAINTING OR TREATING HARD-TO-REACH SURFACES**
AUSRÜSTUNG ZUM REINIGEN, STREICHEN ODER BEHANDELN VON SCHWER ZUGÄNGLICHEN OBERFLÄCHEN
ÉQUIPEMENT POUR NETTOYER, PEINDRE OU TRAITER DES SURFACES D'ACCÈS DIFFICILE

(30) Priority: 26.03.2024 ES 202430594 U; 11.12.2024 ES 202530120
(43) Date of publication of application: 01.10.2025
(73) Proprietor: Grupo Arena Presion, S.L., 28027 Madrid Madrid (ES)
(72) Inventor: HERRANZ LÓPEZ, Juan Carlos, 28027 MADRID (ES)
(74) Representative: Rebate Conde, Maria Fernanda

(56) References cited:
- EP-A1- 4 169 621
- FR-A1- 3 125 017
- US-A1- 2022 204 160
- US-A1- 2022 247 347
- US-B1- 11 235 890

## Description

### TECHNICAL FIELD

The present invention relates to a piece of equipment that has been especially designed to significantly facilitate the cleaning and/or painting manoeuvres of hard-to-reach surfaces, such as building façades, viaducts, bridges, wind turbines, solar panel installations, etc.

The object of the invention is to provide a piece of equipment that facilitates said manoeuvres, with great capacity, versatility and autonomy in the application of the product in question, all with a structure that allows maximum operational stability of the drone while these products are applied.

### BACKGROUND OF THE INVENTION

In the practical field of application of the invention, when cleaning and/or painting hard-to-reach surfaces, the use of drones equipped with a small tank of cleaning product or paint, which is applied by means of a compressor with a complementary application nozzle, is well known.

The problem with this type of equipment is that the product to be applied has a considerable weight, such that the drone is not capable of lifting tanks with product having a certain volume, which means that the autonomy of this equipment is very limited, as it constantly has to refill the small tanks that are part of these drones.

An additional problem with these devices is the limited range of their electric batteries.

In an attempt to overcome this problem, document US 2022/204160 A1 is known, which describes a flying device provided with a pair of lances for cleaning, painting or treating surfaces that are difficult to access. These lances are connected by hoses to the tank or tanks containing the product to be applied, whether paint, water, or abrasive cleaning agents, which are located at ground level. In this device, the means for cleaning, painting or treating surfaces form an integral part of the design of the flying device, making it impossible to install them on conventional drones.

Furthermore, in the flying device it is only foreseen that one of the two lances can be oriented in a single plane, the horizontal plane. This may unbalance the device and significantly complicate the control maneuvers of the flying device when treating certain surfaces that may present irregularities, inclined planes, etc.

It is therefore very important to develop a supporting structure, adaptable to the chassis of most conventional drones, which allows the lances to be jointly oriented both in the horizontal and vertical planes, and in which the weight of the assembly is well balanced, thereby facilitating the maneuverability of the drone.

Finally, another important problem presented by this type of device is that, when applying paint, water or abrasives, the projected material can relatively easily splash onto the lens of the drone's control camera, making cleaning tedious, complex, and even potentially causing damage to the lens itself.

### DESCRIPTION OF THE INVENTION

The piece of equipment for cleaning or painting hard-to-reach surfaces being disclosed solves the above-mentioned problem in a fully satisfactory manner, based on a simple but highly effective solution.

For this purpose, and more specifically, it is provided that the product to be applied is placed in a tank at ground level, so that the drone does not have to bear its weight, and is supplied to the drone through a supply hose, assisted by a compressor unit.

In this way, the power performance required for the drone is significantly reduced, and much smaller and cheaper devices can be used, while on the other hand, the volume of product to be applied can be as large as desired, and large capacity tanks can be used, as this does not affect the load capacity of the drone.

More specifically, the tank of product to be applied, in the case of cleaning equipment, may be integrated in a pressure washer with the capacity to heat the mixture of water and soap, which is assisted by a compressor unit.

As is obvious, the feed hose for the product application nozzle provided on the drone is of adequate length to allow it to move over the entire area to be treated, a length of around 50 metres being given as an example.

The device allows not only the application of water, soapy water, but also environmentally friendly abrasive products, such as water mixed with silicates and/or walnut shell particles, which allows paint stripping and a wide variety of treatments to be applied.

In parallel, the device of the invention can also be used to carry out the painting processes of all types of façades and the like.

In this regard, it is provided that the drone incorporates two lances that are arranged in parallel on a structure equipped with adjustment means for adjusting the swivelling thereof that is linked to the main frame of the drone, such that one of said lances is that which is intended for the application of abrasive products through the corresponding supply hose, a second hose being established in parallel to the latter, which ends in a selective threading head of a lance for applying paint or a lance for applying water or pressurised soapy water, the latter two lances being therefore interchangeable.

The abrasive application lance is angled by 120° at its free end to provide an angle of application of the product other than that of the lance and consequently than that of the drone, so that said product can never rebound at an angle that could reach the drone, since the result of this rebound will never be horizontal, which is the position in which the drone normally is when applying the abrasive product.

At the same time, the lance-bearing structure is embodied as a structure that is easy to install on any drone, consisting of a pyramidal structure based on four metal bars in which the bars end at their rear end in articulated clamps that are attached to the bars of the skates or support structure for supporting the drone on the ground, and which are adjusted at an angle by means of tightening screws, while at the front end they are all linked to a common element, embodied as an articulated support to which the bars are linked two by two at the top and the bottom, through the middle area of which the assembly formed by the two lances passes.

This makes it possible to adjust the angular position of the central support and consequently of the hoses by adjusting the joints associated with the rear ends of the four bars, allowing the assembly formed by the two lances to be precisely swivelled.

Given that this mechanism has a certain limitation in its tilting capacity, it has been provided that the lances, preferably the lance intended for driving water or paint, in alignment with its rear end, include hinge, adjustment and passage means for the fluid to be applied to pass therethrough.

Additionally, the lances include a second fastening point with respect to the drone, embodied in a kind of bridge that is arranged in alignment with the middle area of the drone chassis, in alignment with its centre of gravity, fastening said pair of lances by means of a clamp, a bridge that, in addition to supporting the weight of the lances, supports the forces generated by said lances when they are activated.

This structure consisting of the bridge and the bars allows the same to be adapted to most existing drone chassis, to which it should be added that the lattice structure of the bridge and the distribution of the articulated bars allow an optimum distribution of the stresses generated by the projection of water and abrasives, as opposed to other solutions that would easily cause the drone to tip over or at least vary sharply in position, contrary to what is intended, thus giving it maximum operational stability.

In accordance with another feature of the invention, in contrast to what happens with conventional drones, it is provided that the battery of the drone is replaced by a smaller and lighter battery, basically as an emergency element in the event of a power cut, so that the drone's power supply is connected by means of an electrical cable parallel to the hoses that is powered from the ground through a power outlet, generator or battery with considerably greater autonomy.

This makes it possible to reduce the drone's weight and increase its range, or even offer unlimited range.

Given that the drone is intended to apply paint which, due to gusts of wind or other reasons, could splash the lens of the control camera of the drone, it has been provided that its lens is assisted by a kind of frame by way of a recess in which a plastic screen can be inserted as a protective element, which is easily replaceable in the event that said element is splashed with paint, thus avoiding costly maintenance work for the camera lens.

The device thus described is complemented by two protective casings on the front and rear area of the drone, in order to prevent the product applied in case of bouncing from affecting any sensitive part of the drone in the case of the front casing, while the rear casing prevents possible leaks in the connections between the hoses and the nozzles from also affecting sensitive elements of the drone.

Finally, it only remains to note that the drone is provided with a safety cable for anchoring to the ground, associated for example with a winch, as a safety feature when the drone operates in populated environments, establishing a safety area equivalent to the radius of the maximum height at which the drone is to be flown.

### BRIEF DESCRIPTION OF THE DRAWINGS

As a complement to the description that will be provided herein, and for the purpose of helping to make the features of the invention more readily understandable, according to a preferred practical exemplary embodiment thereof, said description is accompanied by a set of drawings constituting an integral part thereof in which, by way of illustration and not limitation, the following is represented:

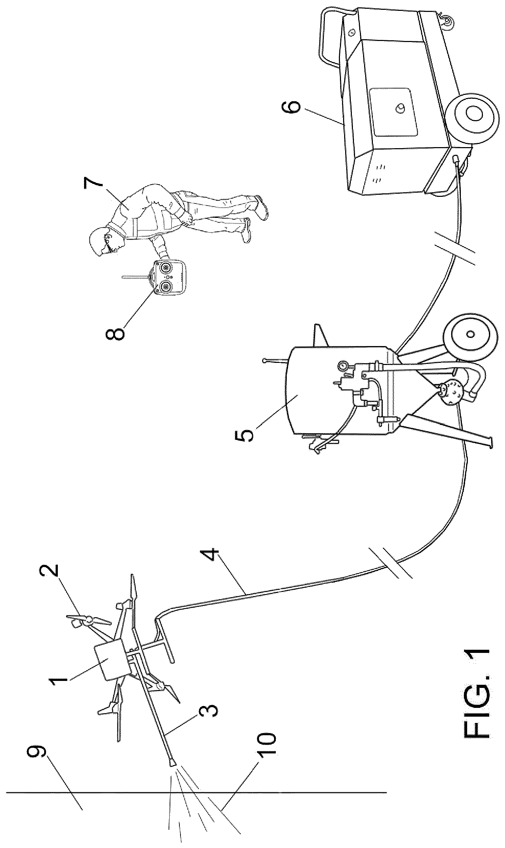

Figure 1 shows a schematic view of a piece of equipment for cleaning, painting or treating hard-to-reach surfaces made in accordance with the object of the present invention.
Figure 2 shows a detailed front perspective view of the drone involved in the piece of equipment of the invention.
Figure 3 shows a side perspective view of the drone involved in the piece of equipment of the invention.
Figure 4 shows a plan view of the assembly of figures 2 and 3.
Figure 5 shows a detail perspective view of the frustoconical supporting and swivelling structure for supporting and swivelling the lances.
Figure 6 shows a detail of the support bridge for supporting the lances by the rear end thereof, at the level of the intermediate area of the drone chassis.
Figure 7 shows a detail perspective view of the swivelling means for swivelling the lance for water, soapy water or pressurised paint.

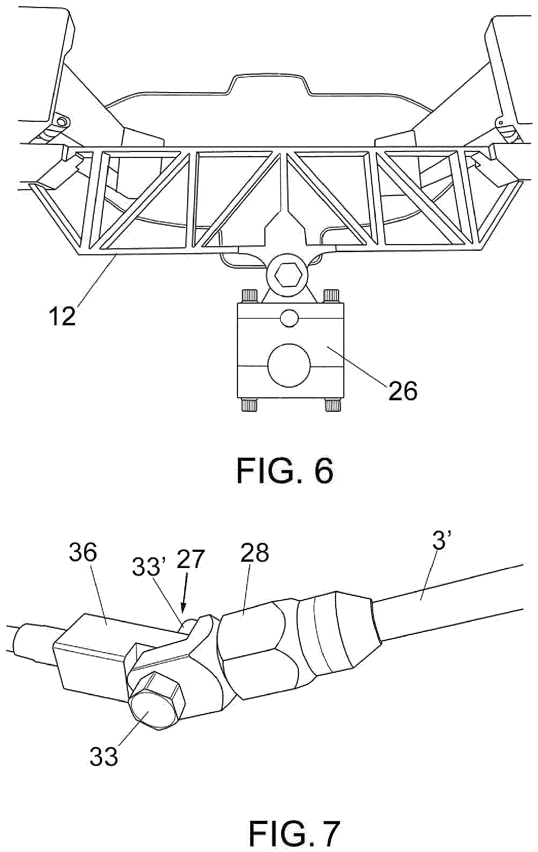

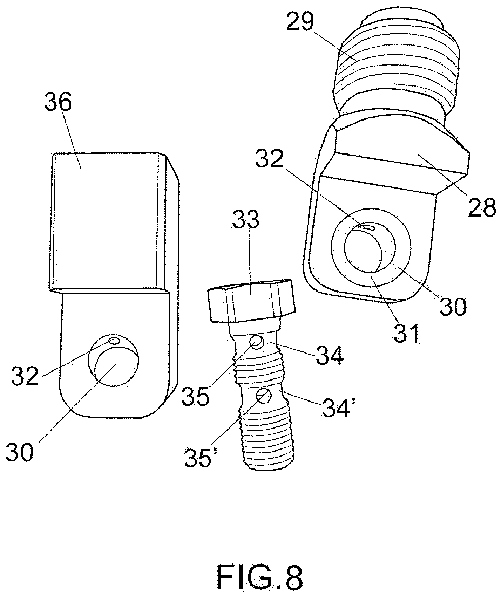

Finally, figure 8 shows an exploded view of the mechanism of figure 7.

### PREFERRED EMBODIMENT OF THE INVENTION

In view of the figure shown above, it can be seen that the piece of equipment of the invention includes a drone (1), assisted by its corresponding propellers (2), and in which at least one nozzle (3) or diffuser lance for diffusing the product (10) to be applied to the surface (9) in question is integrated.

In accordance with the invention, the nozzle (3) is connected through a hose (4) to a storage tank for the product to be treated, which in the chosen exemplary embodiment is integrated in a hot water pressure washer (5), which is located at ground level and can therefore have an extremely high volume of water or product to be applied, without affecting the minimum performance required for the drone (1), which does not need to be very powerful as in other cleaning systems available on the market.

This hose, by way of example, may measure 50 metres, the pressure washer (5) being assisted by a pneumatic compressor (6), preferably a hammer compressor, with a power of around 30 hp.

This makes it possible to work at different pressures depending on the substrate to be treated, even allowing paint stripping when an abrasive based on silicates and walnut shells mixed with water is applied in the tank.

The piece of equipment thus described is complemented by a control panel (8) for control by the operator (7), which allows not only controlling the position of the drone (1), but also controlling the two pieces of equipment associated therewith.

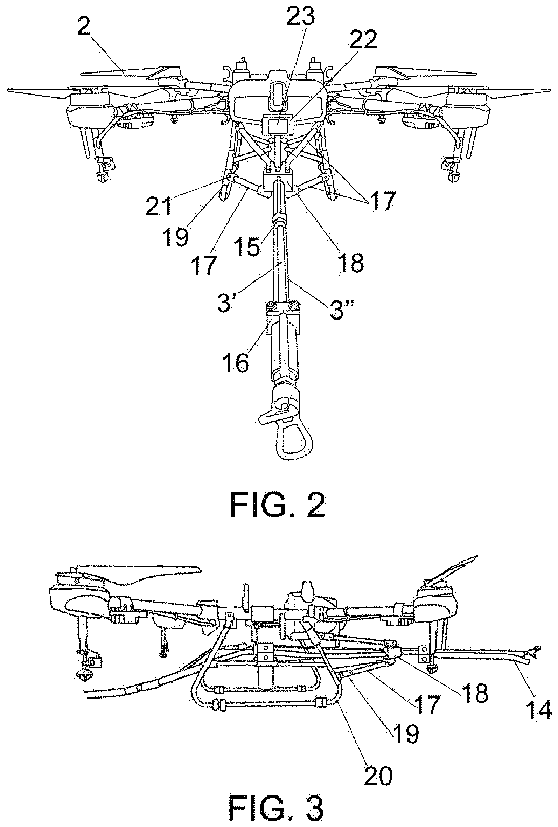

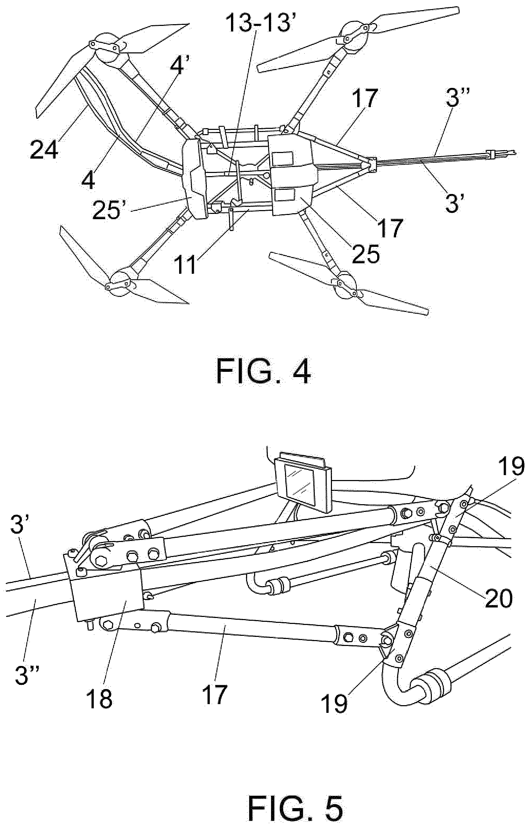

In a preferred embodiment, as shown in figures 2 to 4, the device is designed to be able to apply water, soapy water, environmentally friendly abrasive products as well as paint and/or varnish indistinctly.

For this purpose, the drone incorporates two lances (3'-3") that are arranged in parallel on a support structure that is easily adaptable to any type of drone.

More specifically, to the chassis (11) of the drone is attached a bridge-like support (12) with a lattice structure and ending at the bottom in a clamp (26) on which the rear end of the two lances (3'-3") are attached, including two connectors (13-13') for respective hoses (4-4') that are fed by abrasive product and water or pressurised paint, respectively.

One of the lances (3") is intended for applying abrasive products, for which its free end (14) is bent at an angle of about 120° to ensure that, when bouncing, the abrasive product applied is projected in a direction other than that of the drone, preventing it from impacting against the drone.

The other lance (3') is interchangeable and can be fitted to a threaded head (15), which allows installing a lance for paint application or a lance for the application of water or pressurised soapy water.

In the case of both the paint application lance and the water application lance, the front end of the lance can be fitted with an idle rotation nozzle, in order to apply the product over a maximum surface area, or it can be fitted with adjustment means for adjusting its inclination.

More specifically, and in accordance with figures 7 and 8, it is provided that in alignment with its rear end, the lance includes hinge, adjustment and passage means for the fluid to be applied to pass therethrough (27).

For this purpose, these means are embodied by two end elements (28) and (36) with respective lugs that are articulated by means of a screw (33), both end elements including connection means (29) for the lance and the supply hose thereof, as well as internal pipes (32-32') that extend to the hole (30) of their lugs, as well as through an annular bushing (31), so that the screw (33) includes two annular recesses (34-34') with two diametrical holes (35-35') which are internally connected and which are opposite to the internal pipes (32-32'), allowing the angle of the lance to be varied without interfering with the flow of product passing through the joint through these elements and screw, which can be adjusted by tightening and loosening the opposite nut (33') to which the screw (33) is linked at its free end.

The free end (14) of the lance (3") for applying the abrasive product is preferably swivelled downwards, although it could be complemented by a redirection nozzle for redirecting the flow of the applied product.

The two lances are linked to each other by means of a front clamp (16), while in their rear area they are attached to the aforementioned bridge (12), while in their middle area the same are linked to a swivelling bearing structure, consisting of a pyramidal structure based on four metal bars (17) in which the bars are finished at their rear end in articulated clamps (19) which are attached to the bars of the skates (20) or support structure for supporting the drone on the ground, and which are adjusted at an angle by means of tightening screws (21), while at the front end they are all linked to a common element, embodied in an articulated support (18) to which the bars are linked two by two at the top and the bottom, through the middle area of which the assembly formed by the two lances passes.

In this way, and as mentioned above, by adjusting the clamping screws (21), the lances can be swivelled in accordance with the pyramidal articulated structure of the bars (17).

As can be seen in figure 2, before the drone control video camera there is a kind of frame (22) by way of a recess in which a plastic screen (23) can be inserted as a protective element, which can be easily replaced by sliding same upwards in the event that said element is splashed with paint, thus preventing the camera lens from being stained or damaged.

To save weight and increase or make the drone's autonomy unlimited, it is provided to eliminate its heavy battery and replace it with one of reduced dimensions and weight, which in principle is only used in the event of a power failure, so that a power supply cable (24) will be laid in parallel to the hoses (4-4'), allowing the device to be powered electrically from the ground, without the limitations that this entails.

At the same time, the drone is to be fitted with protective casings (25-25') arranged on the front and rear of the drone to prevent damage to the same, either by bounced product or by possible leaks in the connections between the hoses and the lances.

Finally, when the device is intended for use in populated environments, it is assisted by a safety cable for anchoring to the ground, for example, associated with a winch.

## Claims

1. A piece of equipment for cleaning, painting or treating hard-to-reach surfaces, which, being of the type incorporating a drone equipped with at least one nozzle for dosing a product to be applied to the surface to be treated, drone (1) which is associated through a hose (4) to a tank of the product to be applied, located at ground level, and assisted by a compressor unit (6), and which has a control panel (8) for the drone and the pieces of equipment associated therewith, the drone includes two lances (3'-3") with their respective connectors (13-13') for two hoses (4-4'), one of which is fed by an abrasive product and the second by water, soapy water or pressurised paint, lances which are arranged parallel to each other and which are linked at their rear end to a support structure, **characterized in that** the support structure for the rear ends of the lances (3'-3") is embodied as a bridge (12), the lances (3'-3") being further connected at their middle area to a swivelling bearing structure, consisting of a pyramidal structure based on four metal bars (17) in which the bars are finished at their rear end in articulated clamps (19) which are attached to the bars of the skates (20) or support structure for supporting the drone on the ground, and which include adjustment and immobilization means in alignment with their joints, while at their front end they are all linked to a common element, embodied by an articulated support (18) to which the bars (17) are linked, through the middle area of which the assembly formed by the two lances passes, the drone being provided to include in alignment with its control video camera a frame (22) by way of a recess in which a plastic screen (23) can be inserted in a replaceable manner, at least one of the lances (3-3') having in alignment with its rear end hinge adjustment and passage means for the fluid to be applied to pass therethrough.

2. The piece of equipment for cleaning, painting or treating hard-to-reach surfaces, according to claim 1, wherein the tank of product to be applied is integrated in a hot water pressure washer (5).

3. The piece of equipment for cleaning, painting or treating hard-to-reach surfaces, according to claim 1, wherein the tank of product to be applied contains paint.

4. The piece of equipment for cleaning, painting or treating hard-to-reach surfaces, according to claim 1, wherein the tank of product to be applied contains an abrasive product, such as a mixture of water with silicates and walnut shells.

5. The piece of equipment for cleaning, painting or treating hard-to-reach surfaces, according to claim, wherein the lance (3") intended for applying abrasive products includes a 120° bend at its free end (14).

6. The piece of equipment for cleaning, painting or treating hard-to-reach surfaces, according to claim 1, wherein the lance (3') is interchangeable by means of a threaded head (15), and can be embodied as a lance for applying paint or a lance for applying water or pressurised soapy water.

7. The piece of equipment for cleaning, painting or treating hard-to-reach surfaces, according to claims 1 and 6, wherein the paint application and water or soapy water application lances include, in alignment with their front end, an idle rotation nozzle.

8. The piece of equipment for cleaning, painting or treating hard-to-reach surfaces, according to claims 1 and 6, wherein the paint application and water or soapy water application lances include, in alignment with their front end, a nozzle with means for regulating the inclination of the outgoing flow.

9. The piece of equipment for cleaning, painting or treating hard-to-reach surfaces, according to claims 1 and 5, wherein the free end of the lance for applying the abrasive product includes a redirection nozzle for redirecting the flow of the applied product.

10. The piece of equipment for cleaning, painting or treating hard-to-reach surfaces, according to claims 1 and 3 to 9, wherein the two lances are linked to each other by means of a front clamp (16).

11. The piece of equipment for cleaning, painting or treating hard-to-reach surfaces, according to claims 1 and 3, wherein the drone is electrically powered from the ground through an electrical power cable (24), which is provided to include a small emergency battery that can be used in the event of a power cut.

12. The piece of equipment for cleaning, painting or treating hard-to-reach surfaces, according to claims 1 and 3, wherein the drone includes protective casings arranged on its front and rear area.

13. The piece of equipment for cleaning, painting or treating hard-to-reach surfaces, according to claims 1 and 3, wherein the drone includes a safety cable for anchoring to the ground, associated with a winch.

14. The piece of equipment for cleaning, painting or treating hard-to-reach surfaces, according to claim 1, wherein the hinge adjustment and passage means for the fluid to be applied to pass therethrough (27) are embodied by two end elements (28) and (36) equipped with respective lugs that are articulated by means of a screw (33), both end elements including connection means (29) for the lance, and the supply hose thereof, as well as internal pipes (32-32') that extend to the hole (30) of their lugs, as well as through an annular bushing (31), the screw (33) being provided to include two annular recesses (34-34') with two diametrical holes (35-35') which are internally connected and which are opposite to the internal pipes (32-32'), the screw (33) being complemented by an opposite nut (33') for stabilising the assembly.

## Patentansprüche

1. Gerät zum Reinigen, Lackieren oder Behandeln schwer zugänglicher Oberflächen, das von der Art ist, die eine Drohne enthält, die mit mindestens einer Düse zum Dosieren eines auf die zu behandelnde Oberfläche aufzutragenden Produkts ausgestattet ist, wobei die Drohne (1) über einen Schlauch (4) mit einem Tank für das aufzutragende Produkt verbunden ist, der sich auf Bodenhöhe befindet und von einer Kompressoreinheit (6) unterstützt wird, und das ein Bedienfeld (8) für die Drohne und die zugehörigen Geräte aufweist, wobei die Drohne zwei Lanzen (3'-3") mit ihren jeweiligen Anschlüssen (13-13') für zwei Schläuche (4-4') enthält, von denen einer mit einem Schleifmittel und der zweite mit Wasser, Seifenwasser oder unter Druck stehender Farbe versorgt wird, wobei die Lanzen parallel zueinander angeordnet sind und an ihrem hinteren Ende mit einer Tragstruktur verbunden sind, **dadurch gekennzeichnet, dass** die Tragstruktur für die hinteren Enden der Lanzen (3'-3") als Brücke (12) ausgeführt ist, wobei die Lanzen (3'-3") ferner in ihrem mittleren Bereich mit einer schwenkbaren Lagerstruktur verbunden sind, die aus einer pyramidenförmigen Struktur auf der Basis von vier Metallstangen (17) besteht, wobei die Stangen an ihrem hinteren Ende in Gelenkklemmen (19) enden, die an den Stangen der Kufen (20) oder der Tragstruktur zum Tragen der Drohne auf dem Boden befestigt sind, und die Einstell- und Fixierungsmittel in Ausrichtung mit ihren Gelenken umfassen, während sie an ihrem vorderen Ende alle mit einem gemeinsamen Element verbunden sind, das in Form einer Gelenkstütze (18) ausgeführt ist, mit der die Stangen (17) verbunden sind, durch deren mittleren Bereich die aus den beiden Lanzen bestehende Anordnung verläuft, wobei die Drohne so ausgelegt ist, dass sie in Ausrichtung mit ihrer Steuervideokamera einen Rahmen (22) in Form einer Aussparung umfasst, in die ein Kunststoffschirm (23) austauschbar eingesetzt werden kann, wobei mindestens eine der Lanzen (3-3') in Ausrichtung mit ihrem hinteren Ende über eine Scharnierverstellung und Durchlassvorrichtung für das aufzutragende Fluid aufweist, damit dieses hindurchfließen kann.

2. Gerät zum Reinigen, Lackieren oder Behandeln schwer zugänglicher Oberflächen nach Anspruch 1, wobei der Tank für das aufzutragende Produkt in einen Heißwasser-Hochdruckreiniger (5) integriert ist.

3. Gerät zum Reinigen, Lackieren oder Behandeln schwer zugänglicher Oberflächen nach Anspruch 1, wobei der Tank für das aufzutragende Produkt Farbe enthält.

4. Gerät zum Reinigen, Lackieren oder Behandeln schwer zugänglicher Oberflächen nach Anspruch 1, wobei der Tank für das aufzutragende Produkt ein Schleifmittel enthält, wie z. B. ein Gemisch aus Wasser mit Silikaten und Walnussschalen.

5. Gerät zum Reinigen, Lackieren oder Behandeln schwer zugänglicher Oberflächen nach Anspruch 1, wobei die zum Auftragen von Schleifmitteln bestimmte Lanze (3") an ihrem freien Ende (14) eine 120°-Biegung aufweist.

6. Gerät zum Reinigen, Lackieren oder Behandeln schwer zugänglicher Oberflächen nach Anspruch 1, wobei die Lanze (3') mittels eines Gewindekopfes (15) austauschbar ist und als Lanze zum Auftragen von Farbe oder als Lanze zum Auftragen von Wasser oder unter Druck stehendem Seifenwasser ausgeführt sein kann.

7. Gerät zum Reinigen, Lackieren oder Behandeln schwer zugänglicher Oberflächen nach den Ansprüchen 1 und 6, wobei die Lanzen zum Auftragen von Farbe und zum Auftragen von Wasser oder Seifenwasser in Ausrichtung mit ihrem vorderen Ende eine Leerlaufdüse aufweisen.

8. Gerät zum Reinigen, Lackieren oder Behandeln schwer zugänglicher Oberflächen nach den Ansprüchen 1 und 6, wobei die Lanzen zum Auftragen von Farbe und zum Auftragen von Wasser oder Seifenwasser in Ausrichtung mit ihrem vorderen Ende eine Düse mit Mitteln zum Regulieren der Neigung des austretenden Strahls aufweisen.

9. Gerät zum Reinigen, Lackieren oder Behandeln schwer zugänglicher Oberflächen nach den Ansprüchen 1 und 5, wobei das freie Ende der Lanze zum Auftragen des Schleifmittels eine Umlenkdüse zur Umlenkung des Strahls des aufgetragenen Produkts umfasst.

10. Gerät zum Reinigen, Lackieren oder Behandeln schwer zugänglicher Oberflächen nach den Ansprüchen 1 und 3 bis 9, wobei die beiden Lanzen mittels einer vorderen Klemme (16) miteinander verbunden sind.

11. Gerät zum Reinigen, Lackieren oder Behandeln schwer zugänglicher Oberflächen nach den Ansprüchen 1 und 3, wobei die Drohne vom Boden aus über ein Stromkabel (24) mit Strom versorgt wird, wobei dieses mit einer kleinen Notstrombatterie ausgestattet ist, die im Falle eines Stromausfalls verwendet werden kann.

12. Gerät zum Reinigen, Lackieren oder Behandeln schwer zugänglicher Oberflächen nach den Ansprüchen 1 und 3, wobei die Drohne an ihrer Vorderund Rückseite mit Schutzgehäusen versehen ist.

13. Gerät zum Reinigen, Lackieren oder Behandeln schwer zugänglicher Oberflächen nach den Ansprüchen 1 und 3, wobei die Drohne ein Sicherheitskabel zur Verankerung am Boden aufweist, das mit einer Winde verbunden ist.

14. Gerät zum Reinigen, Lackieren oder Behandeln schwer zugänglicher Oberflächen nach Anspruch 1, wobei die Scharnierverstellung und Durchlassvorrichtung für das aufzutragende Fluid, damit dieses hindurchfließen kann (27) in Form von zwei Endelementen (28) und (36) ausgeführt sind, die mit jeweiligen Laschen ausgestattet sind, die mittels einer Schraube (33) gelenkig verbunden sind, wobei beide Endelemente Anschlussmittel (29) für die Lanze und deren Zufuhrschlauch sowie Innenrohre (32-32') enthalten, die sich bis zur Öffnung (30) ihrer Laschen sowie durch eine ringförmige Buchse (31) erstrecken, wobei die Schraube (33) so vorgesehen ist, dass sie zwei ringförmige Aussparungen (34-34') mit zwei diametralen Öffnungen (35-35') enthält, die intern verbunden sind und den Innenrohren (32-32') gegenüberliegen, wobei die Schraube (33) durch eine gegenüberliegende Mutter (33') zur Stabilisierung der Anordnung ergänzt wird.

## Revendications

1. Équipement pour le nettoyage, la peinture ou le traitement de surfaces difficiles d'accès, qui, étant du type incorporant un drone équipé d'au moins une buse pour le dosage d'un produit à appliquer sur la surface à traiter, drone (1) qui est associé à travers un tuyau (4) à un réservoir du produit à appliquer, situé au niveau du sol, et assisté par un groupe compresseur (6), et qui a un panneau de commande (8) pour le drone et les équipements associés à celui-ci, le drone comporte deux lances (3'-3") avec leurs éléments de liaison (13-13') respectifs pour deux tuyaux (4-4'), dont l'un est alimenté par un produit abrasif et le second par de l'eau, de l'eau savonneuse ou de la peinture sous pression, lances qui sont agencées parallèlement l'une à l'autre et qui sont jointes au niveau de leur extrémité arrière à une structure de support, **caractérisé en ce que** la structure de support pour les extrémités arrières des lances (3'-3") est matérialisée sous la forme d'un pont (12), les lances (3'-3") étant en outre reliées au niveau de leur zone médiane à une structure de palier pivotant, constituée d'une structure pyramidale reposant sur quatre barres métalliques (17) où les barres se terminent à leur extrémité arrière par des brides articulées (19) qui sont fixées aux barres des patins (20) ou structure de support pour le support du drone sur le sol, et qui comportent des moyens de réglage et d'immobilisation en alignement avec leurs pivots, tandis qu'à leur extrémité avant elles sont toutes jointes à un élément commun, matérialisé par un support articulé (18) auquel les barres (17) sont jointes, à travers la zone médiane duquel passe l'ensemble formé par les deux lances, le drone étant fourni pour comporter en alignement avec sa caméra vidéo de contrôle un cadre (22) faisant office d'évidement où un écran en plastique (23) peut être inséré de manière interchangeable, au moins l'une des lances (3-3') ayant en alignement avec son extrémité arrière des moyens de réglage de charnière et de passage pour que le fluide à appliquer y passe à travers.

2. Équipement pour le nettoyage, la peinture ou le traitement de surfaces difficiles d'accès, selon la revendication 1, dans lequel le réservoir de produit à appliquer est intégré dans un nettoyeur haute pression à eau chaude (5).

3. Équipement pour le nettoyage, la peinture ou le traitement de surfaces difficiles d'accès, selon la revendication 1, dans lequel le réservoir de produit à appliquer contient de la peinture.

4. Équipement pour le nettoyage, la peinture ou le traitement de surfaces difficiles d'accès, selon la revendication 1, dans lequel le réservoir de produit à appliquer contient un produit abrasif, tel qu'un mélange d'eau avec des silicates et des coquilles de noix.

5. Équipement pour le nettoyage, la peinture ou le traitement de surfaces difficiles d'accès, selon la revendication 1, dans lequel la lance (3") destinée à appliquer des produits abrasifs comporte un coude à 120° au niveau de son extrémité libre (14).

6. Équipement pour le nettoyage, la peinture ou le traitement de surfaces difficiles d'accès, selon la revendication 1, dans lequel la lance (3') est interchangeable au moyen d'une tête filetée (15), et peut être matérialisée sous la forme d'une lance pour l'application de la peinture ou une lance pour l'application de l'eau ou de l'eau savonneuse sous pression.

7. Équipement pour le nettoyage, la peinture ou le traitement de surfaces difficiles d'accès, selon les revendications 1 et 6, dans lequel les lances d'application de peinture et d'application d'eau ou d'eau savonneuse comportent, en alignement avec leur extrémité avant, une buse à rotation libre.

8. Équipement pour le nettoyage, la peinture ou le traitement de surfaces difficiles d'accès, selon les revendications 1 et 6, dans lequel les lances d'application de peinture et d'application d'eau ou d'eau savonneuse comportent, en alignement avec leur extrémité avant, une buse avec des moyens de régulation de l'inclinaison du flux sortant.

9. Équipement pour le nettoyage, la peinture ou le traitement de surfaces difficiles d'accès, selon les revendications 1 et 5, dans lequel l'extrémité libre de la lance pour l'application du produit abrasif comporte une buse de redirection pour la redirection du flux du produit appliqué.

10. Équipement pour le nettoyage, la peinture ou le traitement de surfaces difficiles d'accès, selon les revendications 1 et 3 à 9, dans lequel les deux lances sont jointes l'une à l'autre au moyen d'une bride avant (16).

11. Équipement pour le nettoyage, la peinture ou le traitement de surfaces difficiles d'accès, selon les revendications 1 et 3, dans lequel le drone est alimenté électriquement depuis le sol par un câble d'alimentation électrique (24), qui est fourni pour comporter une petite batterie de secours qui peut être utilisée en cas de coupure de courant.

12. Équipement pour le nettoyage, la peinture ou le traitement de surfaces difficiles d'accès, selon les revendications 1 et 3, dans lequel le drone comporte des carters de protection agencés sur sa zone avant et arrière.

13. Équipement pour le nettoyage, la peinture ou le traitement de surfaces difficiles d'accès, selon les revendications 1 et 3, dans lequel le drone comporte un câble de sécurité pour l'ancrage au sol, associé à un treuil.

14. Équipement pour le nettoyage, la peinture ou le traitement de surfaces difficiles d'accès, selon la revendication 1, dans lequel les moyens de réglage de charnière et de passage pour que le fluide à appliquer y passe à travers (27) sont matérialisés par deux éléments d'extrémité (28) et (36) équipés d'oreilles respectives qui sont articulées au moyen d'une vis (33), les deux éléments d'extrémité comportant des moyens de liaison (29) pour la lance, et le tuyau d'alimentation de celle-ci, ainsi que des conduits internes (32-32') qui s'étendent jusqu'au trou (30) de leurs oreilles, ainsi qu'à travers une douille annulaire (31), la vis (33) étant fournie pour comporter deux évidements annulaires (34-34') avec deux trous diamétralement opposés (35-35') qui sont reliés intérieurement et qui sont opposés aux conduits internes (32-32'), la vis (33) étant complétée par un écrou opposé (33') pour la stabilisation de l'ensemble.
